# FASCICULE DE BREVET EUROPEEN

(11) **EP 1 859 263 B1**
(45) Date de publication et mention de la délivrance du brevet: **22.08.2018**
(21) Numéro de dépôt: 06709362.5
(22) Date de dépôt: 22.02.2006
(51) Int. Cl.: G01N 30/46, B01D 15/18

(54) **PROCEDE MIXTE DE CHROMATOGRAPHIE EN PHASE SUPERCRITIQUE ET INSTALLATION POUR SA MISE EN OEUVRE**
GEMISCHTES CHROMATOGRAPHIEVERFAHREN MIT SUPERKRITISCHER PHASE UND EINRICHTUNG ZUR DURCHFÜHRUNG DAVON
SUPERCRITICAL-PHASE MIXED CHROMATOGRAPHY METHOD AND INSTALLATION FOR IMPLEMENTING SAME

(30) Priorité: 25.02.2005 FR 0501960
(43) Date de publication de la demande: 28.11.2007
(73) Titulaire: Pic Solution, 84491 Avignon (FR)
(72) Inventeur: SHAIMI, Mohamed, F-84140 Montfavet (FR)
(74) Mandataire: Novagraaf Technologies
(86) Numéro de dépôt international: PCT/FR2006/000401
(87) Numéro de publication internationale: WO 2006/090062

(56) Documents cités:
- WO-A-2004/111632
- US-A1- 2002 185 442
- US-A1- 2004 188 333
- US-B1- 6 641 783

## Description

La présente invention concerne le domaine des techniques chromatographiques et, plus particulièrement, de la chromatographie en phase supercritique ou CPS. Dans cette technique, la phase mobile est constituée par un fluide supercritique ou par un mélange de fluides supercritiques.

L'invention porte sur un procédé de chromatographie en phase supercritique d'un produit P ainsi que sur l'installation pour la mise en oeuvre d'un tel procédé.

Plus précisément, l'invention concerne, selon un premier de ses aspects, un procédé de chromatographie en phase supercritique d'un produit P, comprenant, en continu et dans l'ordre :
- une opération de pompage d'un fluide supercritique ,
- une opération d'injection d'au moins un échantillon du produit P dans au moins une colonne de chromatographie,
- une opération de détection, et
- une opération de collecte de fractions.

Un tel procédé est couramment utilisé en CPS. Il est utilisé dans un objectif analytique ou dans un objectif préparatif.

L'objectif analytique est d'identifier qualitativement et/ou quantitativement les solutés présents dans un produit. Or, la détermination quantitative implique l'application de règles de la thermodynamique qui impliquent elles-mêmes l'utilisation de très petites quantités de produit.

L'objectif préparatif est différent de l'objectif analytique en ce qu'il consiste à isoler un ou plusieurs solutés à partir d'un mélange. Ainsi, dans ce cas, les quantités de produit introduites dans le procédé sont plus importantes car le but est d'isoler à une pureté donnée le maximum de quantité de soluté par unité de temps. Les conditions opératoires du procédé à l'échelle préparative sont déterminées d'abord en développant la méthode de séparation à l'échelle analytique.

La réalisation de ces deux objectifs oblige donc aujourd'hui à mettre en oeuvre deux procédés de chromatographie, un procédé analytique puis un procédé préparatif, et ce en utilisant des installations différentes puisque les quantités à traiter sont significativement différentes selon le cas et que, par conséquent, les instruments constituant les installations sont de dimensions différentes.

La présente invention a donc pour but de fournir un procédé de chromatographie à phase supercritique exempt de ces limitations.

A cette fin, le procédé de l'invention, par ailleurs conforme à la définition générique qu'en donne le préambule ci-dessus, est définie par la revendication 1. De manière générale, un éluant constitue la phase mobile d'une chromatographie. Selon l'invention, la phase mobile est à base d'un fluide choisi parmi tout fluide compatible avec une application en chromatographie en phase supercritique. On appellera ci-après un tel fluide, le fluide supercritique, même si dans certaines conditions de pression et de température, le fluide n'est pas dans un état supercritique au sens strict du terme.

A ce fluide supercritique peut être ajouté un solvant liquide ou un mélange de solvants liquide que l'on appellera modificateur. Le mélange fluide supercritique-modificateur constitue l'éluant.

L'invention présente donc l'avantage de fournir un procédé mixte de CPS, qui permet, à l'aide d'une installation unique, d'effectuer, alternativement, une chromatographie analytique et une chromatographie préparative.

Selon un premier mode préféré de réalisation, une opération de pompage d'un modificateur a lieu en parallèle de l'opération de pompage de fluide supercritique et les flux pompés convergent, pour réaliser l'ajout du modificateur au fluide supercritique, vers une voie principale commune aux voies analytique et préparative, en amont d'un deuxième aiguillage vers les opérations d'injection respectives de la voie analytique et de la voie préparative.

Le modificateur peut être un solvant organique ajouté pour modifier la polarité de la phase mobile. Selon l'invention, le mélange fluide supercritique-modificateur constitue la phase mobile pour la chromatographie en phase supercritique.

Selon un deuxième mode préféré de réalisation de l'invention, une opération de pompage d'un modificateur et l'ajout de celui-ci au fluide supercritique ont lieu en amont du premier aiguillage. Dans ce cas, l'opération de pompage de fluide supercritique consiste à pomper le fluide supercritique mais aussi à le mélanger avec le modificateur.

L'opération de détection se fait, par exemple, par spectroscopie dans l'ultraviolet. Le procédé de l'invention comprend une opération de contrôle de la température de l'éluant entre les opérations de pompage et l'opération d'injection.

De manière avantageuse, l'opération de collecte comprend en amont une opération de régulation de la pression.

Selon l'invention, le fluide supercritique est par exemple le dioxyde de carbone CO₂.

Un autre objet de l'invention est une installation pour la chromatographie en phase supercritique d'un produit P, telle que définie par la revendication 7. De manière avantageuse, une pompe de modificateur dotée d'une tête interchangeable peut être placée juste en amont de la première vanne d'aiguillage ou juste en amont d'une deuxième vanne d'aiguillage placée en aval des pompes de fluide supercritique.

Selon un mode de réalisation plus particulièrement préféré, la pompe de modificateur est une pompe basse pression placée en amont de la première vanne d'aiguillage, et les pompes de fluide supercritique alternativement opérationnelles sont des pompes haute pression.

De préférence, l'installation selon l'invention comprend un dispositif de contrôle informatique des différentes parties de ladite installation.

L'installation selon l'invention comprend par exemple un échangeur de chaleur placé en aval des pompes de fluide supercritique et de modificateur et en amont des systèmes d'injection.

Les deux pompes de fluide supercritique ont, de préférence, des capacités de débit respectives présentant un rapport au moins égal à 2,5. L' installation de l'invention comprend un régulateur de contre-pression en aval de la deuxième vanne d'aiguillage et en amont du système de collecte. Préférentiellement, le régulateur de contre-pression est placé en aval de l' appareil de détection. Selon l'invention, l'appareil de détection peut être un spectrophotomètre dans l'ultraviolet et comprendre soit deux cellules de mesure montées en parallèle chacune à la suite des colonnes de chromatographie respectives, soit deux cellules interchangeables juste en aval d'une troisième vanne d'aiguillage placée à la suite des colonnes de chromatographie.

D'autres avantages et particularités de l'invention apparaîtront à la lecture de la description détaillée qui en est faite ci-après, à titre indicatif et nullement limitatif, en référence aux dessins annexés dans lesquels :
- la figure 1 représente schématiquement un premier mode de réalisation du procédé selon l'invention ;
- la figure 2 représente schématiquement un deuxième mode de réalisation du procédé selon l'invention ;
- la figure 3 représente schématiquement un premier mode de réalisation de l'installation selon l'invention ;
- la figure 4 représente schématiquement un deuxième mode de réalisation de l'installation selon l'invention.

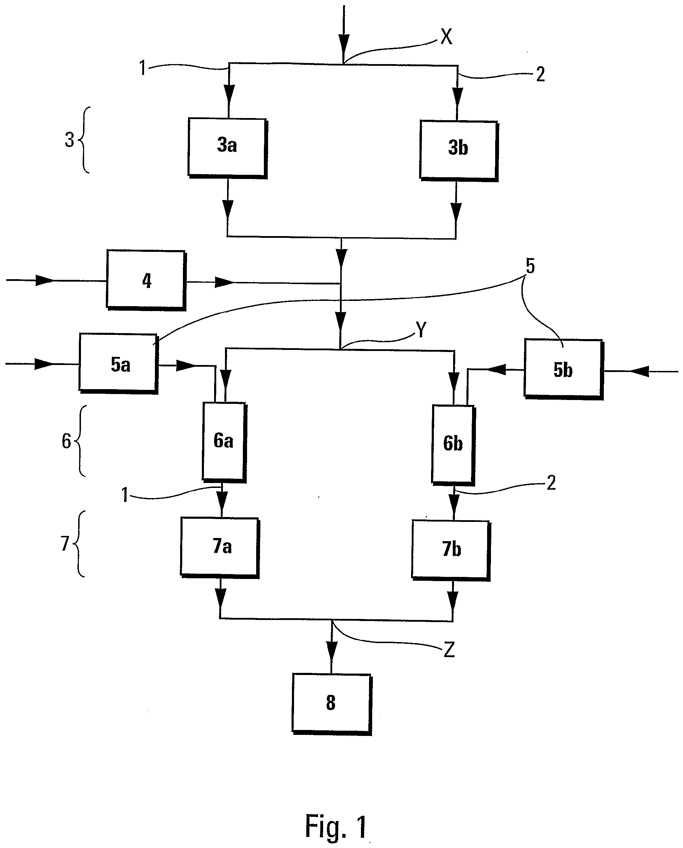

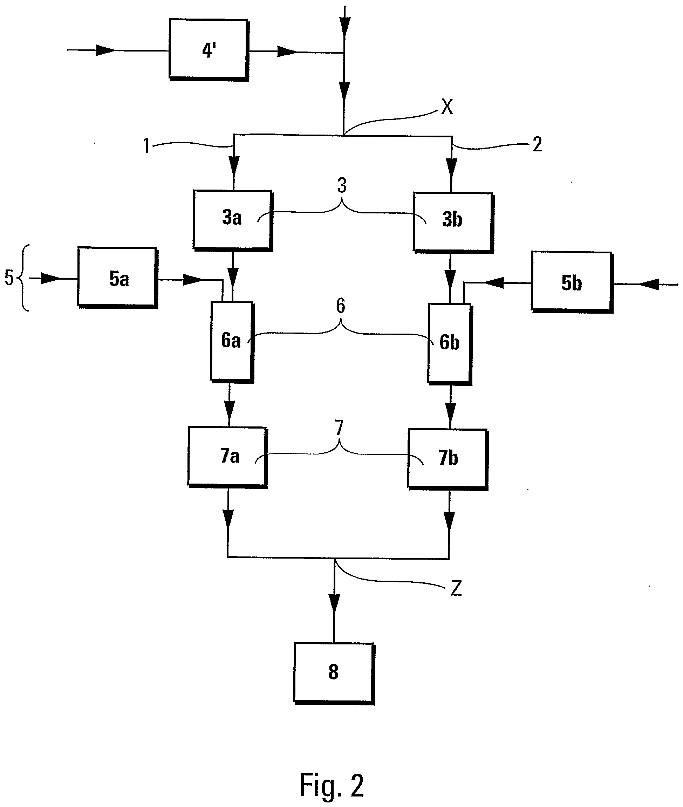

Les figures 1 et 2 illustrent le procédé selon l'invention, et plus particulièrement deux modes préférés de réalisation.

Selon l'invention, le procédé de chromatographie en phase supercritique ou CPS d'un produit P comprend en continu et dans l'ordre des opérations de pompage 3 d'un fluide supercritique, d'injection 5 d'au moins un échantillon dans au moins une colonne 6 de chromatographie, de détection 7 et de collecte 8 de fractions.

Le fluide supercritique peut être tout fluide compatible avec la chromatographie en phase supercritique. Par exemple, le fluide supercritique est le dioxyde de carbone CO₂.

Avant l'opération de pompage 3, le fluide supercritique peut subir une opération de contrôle de sa température, et plus précisément un refroidissement.

Le procédé peut en outre inclure une opération de pompage 4, 4' d'un modificateur. Cette opération peut se faire entre les opérations de pompage 3 du fluide supercritique et d'injection 5 ou en amont de l'opération de pompage 3.

Selon l'invention, le modificateur peut être un alcool, tel que le méthanol, l'éthanol et l'isopropanol, ou tout autre solvant organique ou mélange de solvants organiques.

Une voie analytique 1 ou une voie préparative 2 peut être empruntée en fonction de l'aiguillage qui est fait en X et en Y.

Le procédé par la voie analytique a un débit réduit par rapport au procédé par la voie préparative.

Dans la figure 1, le pompage 4 du modificateur a lieu entre l'opération de pompage 3 du fluide supercritique et l'opération d'injection 5. Ainsi, les flux de fluide supercritique et de modificateur convergent en amont de l'aiguillage en Y.

Dans ce premier mode de réalisation de l'invention, un premier aiguillage s'effectue en X entre un pompage 3a de fluide supercritique à un débit analytique et un pompage 3b de fluide supercritique à un débit plus élevé pour le mode préparatif. Un deuxième aiguillage a lieu en Y entre une opération d'injection analytique 5a et une opération d'injection préparative 5b.

Dans la figure 2, le pompage 4' du modificateur a lieu en amont de l'aiguillage en X. Ainsi, les flux de fluide supercritique et de modificateur convergent en amont de l'aiguillage en X. Dans ce cas, l'aiguillage en Y n'est plus nécessaire.

Selon l'invention, d'une manière générale, les voies analytique 1 et préparative 2 incluent chacune une opération de pompage 3a, 3b et une opération d'injection 5a, 5b dans au moins une colonne 6a, 6b de chromatographie.

L'opération de détection 7 peut être commune aux deux voies en aval d'un aiguillage Z, ou consister en deux opérations de détection 7a et 7b respectivement sur la voie analytique 1 et la voie préparative 2.

De préférence, pour réaliser l'opération de détection 7, deux cellules sont utilisées : une cellule analytique 7a sur la voie analytique 1 et une cellule préparative 7b sur la voie préparative 2. En fonction de la voie choisie, la cellule est connectée par fibre optique à un détecteur spectrophotomètre ultra-violet unique.

De préférence, la détection 7 se fait par spectroscopie dans l'ultraviolet. Cependant, on peut envisager toute technique de détection compatible avec le soluté à détecter et avec les conditions opératoires (nature de l'éluant, etc.). Ainsi, on pourra, à titre d'exemple, utiliser la détection de masse, l'infrarouge et un détecteur par diffusion de la lumière en phase gazeuse (ELSD).

L'opération finale de collecte 8 des fractions séparées par passage dans la ou les colonnes 6a, 6b de chromatographie est commune aux voies analytique 1 et préparative 2.

Cette opération de collecte 8 consiste de manière classique à séparer dans un premier temps chaque fraction de l'éluant, c'est-à-dire du mélange fluide supercritique-modificateur, puis à stocker chaque fraction pure ou en solution dans le modificateur dépourvue du fluide supercritique préalablement évaporé, avant leur drainage pour utilisation. L'opération de collecte 8 comprend en amont une première opération de régulation de la pression et éventuellement une deuxième opération de régulation de la pression.

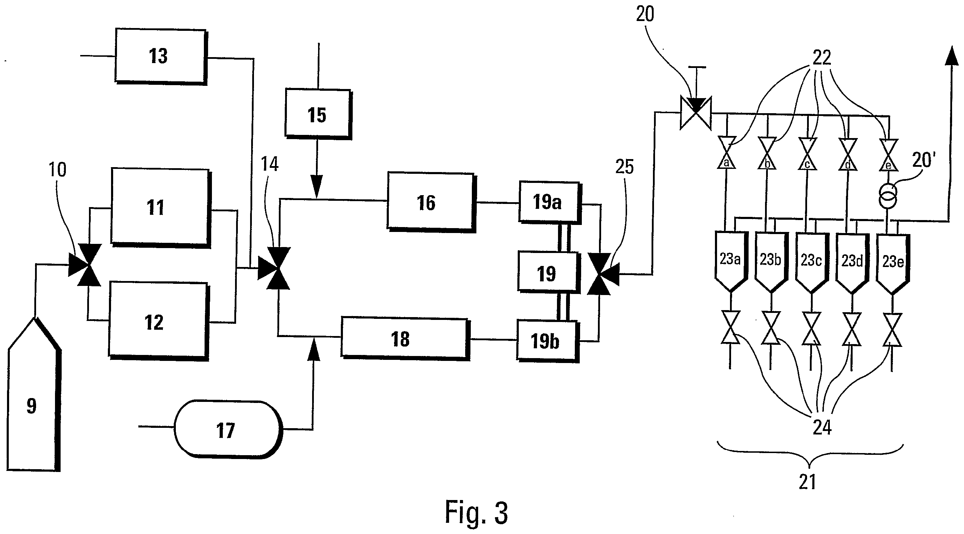

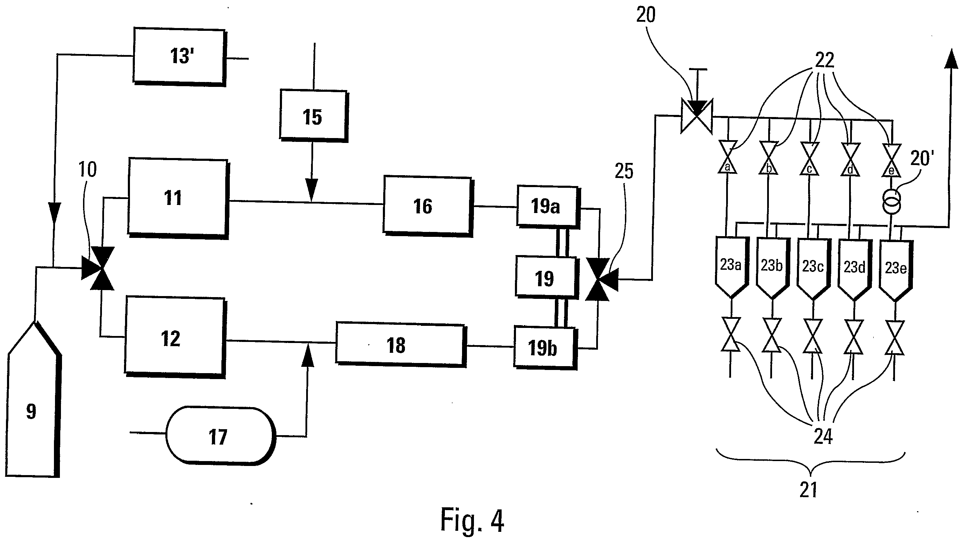

Les figures 3 et 4 illustre l'installation pour la chromatographie en phase supercritique ou CPS d'un produit P, et plus particulièrement deux modes de réalisation préférés d'une telle installation.

Selon l'invention, un réservoir 9 de fluide supercritique, par exemple de CO₂, est relié soit à une pompe 11 de fluide supercritique de faible débit soit à une pompe 12 de fluide supercritique de plus haut débit, en fonction de la position de la première vanne 10.

Le faible débit caractérise un fonctionnement en mode analytique alors que le plus haut débit caractérise un fonctionnement en mode préparatif.

L'invention présente l'avantage de proposer une installation exempte de problèmes de chute de pression, de volume mort et de forme des pics de détection qui seraient dus à l'importante différence de débit entre les deux modes de fonctionnement s'ils utilisaient une même voie. Les diamètres intérieurs des tubes de l'installation, le volume mort, les caractéristiques de régime (turbulent ou laminaire) sont choisis séparément pour chacun des modes analytique et préparatif.

La pompe 11 de faible débit, du mode analytique, a un débit maximum de 20 mL/min, de préférence un débit inférieur à 10 mL/min, pour une pression de 300 bar. La pompe 12 est de plus haut débit que la pompe 11.

Le rapport entre les capacités de débit respectives des deux pompes à éluant est au moins égal à 2,5, de préférence au moins égal à 3, et plus préférentiellement au moins égal à 4.

Dans les deux modes, le dioxyde de carbone CO₂, par exemple, est condensé et alors pompé et pressurisé à la pression d'utilisation.

L'addition du modificateur est réalisée par une pompe 13, 13' à piston avec une tête variable. Le modificateur peut être ajusté entre 0 et 100%, en quantité de modificateur par rapport au débit total, dans le mode analytique et dans le mode préparatif. Le changement d'un mode à l'autre se fait automatiquement par le logiciel informatique de contrôle et nécessite uniquement comme opération manuelle, de changer la tête de pompe, ce qui est une opération facile et rapide.

Une alternative au changement de tête de la pompe 13, 13' est d'utiliser deux pompes à modificateur, une pompe pour chaque voie.

La température de l'éluant est commandée par l'intermédiaire d'un échangeur de chaleur avant d'entrer dans la colonne 16, 18. L'unité offre ainsi la possibilité de fonctionner à une température inférieure à la température ambiante, ce qui dans certains cas peut améliorer la sélectivité et donc la productivité.

Un système de changement de réservoir 9 peut commuter automatiquement d'un réservoir vide à un réservoir plein permettant à l'installation de fonctionner sans interruption.

Selon différents modes de réalisation de l'invention, la pompe 13 à modificateur peut se trouver en aval des pompes 11, 12 de fluide supercritique, comme le montre la figure 3, ou en amont de la première vanne 10, comme le montre la figure 4.

Dans le cas illustré à la figure 3, une deuxième vanne 14 est placée en aval des pompes 11, 12 de fluide supercritique et 13 de modificateur et reçoit donc un flux composé de fluide supercritique et de modificateur.

Cette deuxième vanne 14 dirige le flux qu'elle reçoit soit vers un système 15 d'injection dans au moins une colonne 16 de chromatographie pour le mode analytique, soit vers un système 17 d'injection dans au moins une colonne 18 de chromatographie pour le mode préparatif.

Dans le cas illustré à la figure 4, les flux issus respectivement des pompes 11, 12 de fluide supercritique sont dirigés respectivement vers le système 15 d'injection dans au moins une colonne 16 de chromatographie pour le mode analytique et vers le système 17 d'injection dans au moins une colonne 18 de chromatographie pour le mode préparatif.

Le système 15 d'injection en mode analytique peut être constitué d'un échantillonneur automatique. L'échantillonneur automatique offre tous les avantages d'un système d'injection automatique tels que la réalisation d'injections uniques et répétées, d'injections programmées d'un même échantillon ou d'un échantillon différent, la reproductibilité. Ceci permet à l'opérateur de mettre en place rapidement et efficacement une méthode de séparation pour un passage rapide en mode préparatif.

En mode préparatif, un système 17 d'injection particulier permet à l'opérateur de réaliser des injections manuelles à l'aide d'une seringue ou des injections automatiques par une pompe. Cette opération peut être effectuée sans débrancher de matériel.

L'injection manuelle est utile pour le test d'efficacité de la colonne et/ou pour la séparation de fractions quand la quantité d'échantillon est petite et que peu d'injections sont nécessaires. Pour un petit volume d'échantillon, l'utilisation de la pompe d'injection peut avoir comme conséquence la perte d'échantillon, puisqu'un volume minimum est nécessaire juste pour remplir les tubes de l'installation. Dans ce cas, l'injection manuelle est commode et adaptée. Cependant, quand des injections multiples sont exigées, l'injection automatique à l'aide d'une pompe est plus adéquate. Dans les deux systèmes d'injection, la taille de boucle du produit à injecter peut être ajustée.

Les systèmes 15, 17 d'injection sont conçus avec un volume mort peu important afin d'être nettoyés facilement et rapidement entre les différentes utilisations de l'installation.

Les systèmes 15, 17 d'injection sont conçus pour fonctionner avec des colonnes de diamètre intérieur compris entre 4,6 mm et 1 cm pour le mode analytique, et avec des colonnes de plus grande taille, dont le diamètre intérieur est supérieur ou égal à 1 cm, pour le mode préparatif. Le choix du diamètre intérieur des colonnes dépend de la longueur de colonne et de la taille des particules qu'elle doit contenir. Dans le cas où l'installation compte plusieurs colonnes 16 et/ou plusieurs colonnes 18, une ou deux vannes de choix de colonne sont disponibles pour permettre la commutation de colonne pendant le fonctionnement de l'installation. Les colonnes analytiques 16 et préparatives 18 peuvent par exemple être au nombre de six chacune.

Le détecteur 19, représenté sur les figures 3 et 4 en amont d'une vanne d'aiguillage 25 placée au point de convergence des voies analytique et préparative en amont du système 21 de collecte, fonctionnant par exemple dans l'ultraviolet, peut avantageusement être commun aux deux modes. Deux cellules UV séparées, une cellule analytique 19a et une cellule préparative 19b, de taille différente, peuvent être utilisées afin d'obtenir un profil de pics de détection optimal quel que soit le mode de fonctionnement.

Le détecteur peut, selon un autre mode de réalisation de l'invention (non représenté), être installé à la suite de la vanne d'aiguillage 25 et comprendre soit une unique cellule de mesure, soit deux cellules de mesure qui sont alors interchangeables en fonction du mode de fonctionnement, analytique ou préparatif, de l'installation.

La pression de sortie de colonne est réglée en utilisant un régulateur 20 de contre-pression, commun aux deux modes de fonctionnement de l'installation.

Un régulateur additionnel 20' de contre-pression peut être ajouté en mode analytique, à bas débit, pour commander une contre-pression dans la ligne de collection consacrée au mode analytique permettant au régulateur principal 20 de contre-pression de commander la pression de sortie de colonne. Cette solution peut être mise en oeuvre quand la différence de débit entre les deux modes est tellement grande qu'un seul régulateur de contre-pression ne suffit pas à commander la pression de sortie de colonne pour les deux modes.

Le volume mort est réduit au minimum pour éviter un re-mélange post-colonne qui affecterait la pureté finale des fractions isolées.

Le système de collecte peut inclure cinq vannes 22a,b,c,d,e. Dans les figures 3 et 4, la vanne 22e est réservée au mode analytique et les vannes 22a,b,c,d au mode préparatif.

En mode préparatif, les différentes fractions obtenues à la sortie de la ou des colonnes 18 sont réparties entre la vanne 22a pour les fractions déchet et les vannes 22b,c,d pour les fractions d'intérêt, par exemple, une pour chaque énantiomère et une pour le mélange des deux énantiomères ou fraction moyenne.

L'ajout de vannes supplémentaires peut être envisagé pour des fractions d'intérêt additionnelles.

Le volume mort est ici encore réduit au minimum afin d'éviter un re-mélange des fractions.

Les fractions peuvent être collectées sur un critère de temps ou sur la base du seuil UV mesuré au niveau du détecteur 19.

Des séparateurs 23a,b,c,d,e sont utilisés pour séparer le CO₂ de chaque fraction, diluée ou non dans du modificateur. Les fractions purifiées peuvent alors être facilement rassemblées.

Chaque fraction purifiée est stockée dans un récipient à pression moyenne équipé d'une vanne 24 pour vidanger périodiquement afin de récupérer la fraction.

De manière avantageuse, l'installation peut être gérée par un logiciel de contrôle qui permet de sélectionner entre le mode analytique et le mode préparatif.

A partir d'un système d'identification des paramètres, ou système PID, visible sur un écran, les différentes parties de l'installation selon l'invention telles que les vannes, les pompes et les régulateurs de pression peuvent être actionnées par un simple clic lors du fonctionnement de l'installation. Le contrôle du procédé peut être fait directement par l'opérateur à partir du système PID ou automatiquement en chargeant une méthode.

L'opérateur sélectionne le mode analytique pour développer des méthodes pour une séparation donnée. Une méthode contenant tous les paramètres de séparation (débit, taux de modificateur, pression, température, chois de la de colonne, etc.) peut être créée par l'opérateur. De même une séquence contenant plusieurs méthode différentes peut aussi être crée par l'opérateur et exécutée par le logiciel d'une manière automatique sans intervention de l'opérateur, et cela afin d'identifier plus rapidement la méthode de séparation la plus adéquate. L'opérateur a également la possibilité de contrôler l'installation à partir du système PID quand peu d'injections sont nécessaires pour développer une méthode de séparation.

Des méthodes préparatives sont créées par l'opérateur pour chaque séparation et contiennent toutes les paramètres nécessaires pour la production : débit total, taux de modificateur, pression, température, quantité d'injection, durée de cycle, nombre d'injections et paramètres de collecte. Des méthodes sont enregistrées sous des noms appropriés et peuvent être chargées pour des séparations semblables prochaines.

L'opérateur peut également exploiter manuellement le système PID quand de petites quantités de produit P doivent être séparées. Par exemple, il peut effectuer une à quatre injections préparatives en utilisant l'injection manuelle avec la seringue.

À la fin de chaque utilisation de l'installation pour la production d'un produit P' purifié, une méthode de rinçage peut être employée pour nettoyer le système d'injection et le système de collecte afin de préparer l'installation pour la prochaine utilisation.

Les paramètres tels que le débit, la pression, la température, le signal des détecteurs, le statut des vannes de collecte, relevant d'une méthode spécifique, peuvent être montrés pendant la séparation. Le rapport de séparation contenant des chromatogrammes, enregistrés sous des noms spécifiques, et les conditions opératoires peuvent être imprimés pour les cahiers de laboratoire.

Le logiciel peut gérer des systèmes d'alerte, par exemple de la limite de haute-pression et du temps de collecte, et gérer en conséquence le fonctionnement de l'installation en adaptant la valeur des paramètres concernés.

## Revendications

1. Procédé de chromatographie en phase supercritique d'un produit P, comprenant, en continu et dans l'ordre :
- une opération de pompage (3) d'un fluide supercritique,
- une opération d'injection (5) d'au moins un échantillon du produit P dans au moins une colonne (6) de chromatographie,
- une opération de détection (7), et
- une opération de collecte (8) de fractions,
**caractérisé en ce qu'**il comprend :
- un premier aiguillage (X) entre une voie analytique (1) et une voie préparative (2), ledit premier aiguillage (X) s'effectuant préalablement à l'opération de pompage (3) de fluide supercritique, lesdites voies analytique (1) et préparative (2) incluant chacune leurs propres opérations de pompage de fluide supercritique, la voie analytique comprenant une pompe à débit réduit (3a) et la voie préparative comprenant une pompe à débit plus élevé (3b) et lesdites voies analytique (1) et préparative (2) incluant chacune leurs propres opérations d'injection (5a, 5b), la voie analytique comprenant au moins une colonne (6a) et la voie préparative comprenant au moins une colonne (6b) ;
- un deuxième aiguillage (Z) au point de convergence des voies analytique et préparative en amont d'un système (21) de collecte ;
- une régulation de la pression de sortie de colonne en utilisant un régulateur (20) de contre-pression, placé en aval du point de convergence et en amont du système (21) de collecte ;
- une opération finale de collecte (8) par le système (21) de collecte commun aux voies analytique (1) et préparative (2).

2. Procédé selon la revendication 1, dans lequel une opération de pompage (4) d'un modificateur a lieu en parallèle de l'opération de pompage (3) de fluide supercritique et les flux pompés convergent, pour réaliser l'ajout du modificateur au fluide supercritique, vers une voie principale commune aux voies analytique et préparative, en amont d'un deuxième aiguillage Y vers les opérations d'injection respectives de la voie analytique (1) et de la voie préparative (2).

3. Procédé selon la revendication 1, dans lequel une opération de pompage (4') d'un modificateur et l'ajout de celui-ci au fluide supercritique ont lieu en amont du premier aiguillage X.

4. Procédé selon l'une quelconque des revendications 1 à 3, dans lequel l'opération de détection (7) se fait par spectroscopie dans l'ultraviolet.

5. Procédé selon l'une quelconque des revendications 1 à 4, comprenant en outre une opération de contrôle de la température de l'éluant entre les opérations de pompage (3, 4, 4') et l'opération d'injection (5).

6. Procédé selon l'une quelconque des revendications 1 à 5, dans lequel le fluide supercritique est le dioxyde de carbone CO₂.

7. Installation pour la chromatographie en phase supercritique d'un produit P, comprenant les parties suivantes :
- deux pompes (11, 12) de fluide supercritique montées en parallèle, l'une des pompes étant de débit réduit pour un mode analytique et l'autre de débit plus élevé pour un mode préparatif et dont l'une seulement est opérationnelle en fonctionnement de l'installation,
- une première vanne (10) d'aiguillage en amont desdites pompes (11, 12), qui est actionnée de façon à laisser circuler le fluide supercritique vers la pompe opérationnelle,
- une pompe de modificateur,
- deux systèmes (15, 17) d'injection d'au moins un échantillon du produit P dans au moins deux colonnes (16, 18) de chromatographie respectives, lesdits deux systèmes d'injection et la taille desdites colonnes étant conçus respectivement pour un mode analytique et pour un mode préparatif, lesdits deux systèmes d'injection étant montés en parallèle en aval des deux pompes de fluide supercritique et de la ou des deux pompes de modificateur et en amont desdites colonnes,
- un appareil (19) de détection,
- une deuxième vanne d'aiguillage (25) en aval des colonnes de chromatographie définissant un point de convergence des voies analytique et préparative,
- un régulateur (20) de contre-pression commun aux deux voies analytique et préparative, en aval de la deuxième vanne d'aiguillage (25), et
- un système (21) de collecte commun aux voies analytique et préparative, en aval du régulateur (20) de contre-pression.

8. Installation selon la revendication 7 dans laquelle une pompe (13, 13') de modificateur dotée d'une tête interchangeable est placée juste en amont de la première vanne (10) d'aiguillage ou juste en amont d'une deuxième vanne (14) d'aiguillage placée en aval des pompes (11, 12) de fluide supercritique.

9. Installation selon la revendication 8, dont la pompe de modificateur (13') est une pompe basse pression placée en amont de la première vanne (10) d'aiguillage, et dont les pompes de fluide supercritique alternativement opérationnelles sont des pompes haute pression.

10. Installation selon l'une quelconque des revendications 7 à 9, comprenant un dispositif de contrôle informatique des différentes parties de ladite installation.

11. Installation selon l'une quelconque des revendications 7 à 10, comprenant un échangeur de chaleur placé en aval des pompes (11, 12, 13, 13') de fluide supercritique et de modificateur et en amont des systèmes (15, 17) d'injection.

12. Installation selon l'une quelconque des revendications 7 à 11, dont les deux pompes (11, 12) de fluide supercritique ont des capacités de débit respectives présentant un rapport au moins égal à 2,5.

13. Installation selon l'une quelconque des revendications 7 à 12, comprenant le régulateur (20) de contre-pression en aval de l'appareil (19) de détection

14. Installation selon l'une quelconque des revendications 7 à 13, dans laquelle l'appareil (19) de détection est un spectrophotomètre dans l'ultraviolet et comprend soit deux cellules (19a, 19b) de mesure montées en parallèle chacune à la suite des colonnes (16, 18) de chromatographie respectives, soit deux cellules interchangeables juste en aval d'une troisième vanne (25) d'aiguillage placée à la suite des colonnes (16, 18) de chromatographie.

## Patentansprüche

1. Verfahren zur Chromatographie in überkritischer Phase eines Produktes P, umfassend, kontinuierlich und in der Reihenfolge:
- einen Vorgang des Pumpens (3) eines überkritischen Fluids,
- einen Vorgang des Einspritzens (5) von mindestens einer Probe des Produktes P in mindestens eine Chromatographiesäule (6),
- einen Vorgang des Nachweisens (7), und
- einen Vorgang des Sammelns (8) von Fraktionen, **dadurch gekennzeichnet, dass** es umfasst:
- eine erste Weiche (X) zwischen einem Analysepfad (1) und einem Vorbereitungspfad (2), wobei die erste Weiche (X) vor dem Vorgang des Pumpens (3) von überkritischem Fluid erfolgt, wobei der Analyse- (1) und Vorbereitungspfad (2) jeder seinen eigenen Vorgänge zum Pumpen von überkritischem Fluid einschließen, wobei der Analysepfad eine Pumpe mit reduziertem Durchsatz (3a) umfasst und der Vorbereitungspfad eine Pumpe mit höherem Durchsatz (3b) umfasst, und der Analyse- (1) und Vorbereitungspfad (2) jeder seine eigenen Einspritzvorgänge (5a, 5b) einschließen, wobei der Analysepfad mindestens eine Säule (6a) umfasst und der Vorbereitungspfad mindestens eine Säule (6b) umfasst;
- eine zweite Weiche (Z) am Zusammenflusspunkt des Analyse- und Vorbereitungspfades stromaufwärts eines Sammelsystems (21);
- eine Regelung des Säulenausgangsdrucks unter Verwendung eines Gegendruckreglers (20), der stromabwärts des Zusammenflusspunkts und stromaufwärts des Sammelsystems (21) platziert ist;
- einen abschließenden Sammelvorgang (8) durch das Sammelsystem (21), das dem Analyse- (1) und Vorbereitungspfad (2) gemein ist.

2. Verfahren nach Anspruch 1, wobei parallel zum Vorgang des Pumpens (3) von überkritischem Fluid ein Vorgang des Pumpens (4) eines Modifizierungsmittels stattfindet, und die gepumpten Ströme, um die Zugabe des Modifizierungsmittels zum überkritischen Fluid auszuführen, zu einem dem Analyse- und Vorbereitungspfad gemeinen Hauptpfad stromaufwärts einer zweiten Weiche Y zu den jeweiligen Einspritzvorgängen des Analyse- (1) und des Vorbereitungspfades (2) hin zusammenfließen.

3. Verfahren nach Anspruch 1, wobei ein Vorgang des Pumpens (4') eines Modifizierungsmittels und die Zugabe desselben zum überkritischen Fluid stromaufwärts der ersten Weiche X stattfinden.

4. Verfahren nach einem der Ansprüche 1 bis 3, wobei der Nachweisvorgang (7) durch Ultraviolett-Spektroskopie geschieht.

5. Verfahren nach einem der Ansprüche 1 bis 4, weiter einen Vorgang des Steuerns der Temperatur des Eluenten zwischen den Pumpvorgängen (3, 4, 4') und dem Einspritzvorgang (5) umfassend.

6. Verfahren nach einem der Ansprüche 1 bis 5, wobei das überkritische Fluid Kohlendioxid CO₂ ist.

7. Anlage zur Chromatographie in überkritischer Phase eines Produktes P, umfassend die folgenden Teile:
- zwei parallel montierte Pumpen (11, 12) für überkritisches Fluid, wobei eine der Pumpen für einen Analysemodus von reduziertem Durchsatz ist, und die andere für einen Vorbereitungsmodus von höherem Durchsatz ist, und von denen im Betrieb der Anlage nur eine operativ ist,
- ein erstes Weichenventil (10) stromaufwärts der Pumpen (11, 12), das so betätigt wird, dass es das überkritische Fluid zur operativen Pumpe hin zirkulieren lässt,
- eine Modifizierungsmittelpumpe,
- zwei Systeme (15, 17) zum Einspritzen von mindestens einer Probe des Produktes P in mindestens zwei jeweilige Chromatographiesäulen (16, 18), wobei die zwei Einspritzsysteme und die Größe der Säulen jeweils für einen Analysemodus und für einen Vorbereitungsmodus konzipiert sind, wobei die zwei Einspritzsysteme parallel stromabwärts der zwei Pumpen für überkritisches Fluid und der einen oder der zwei Pumpen für Modifizierungsmittel und stromaufwärts der Säulen montiert sind,
- eine Nachweisvorrichtung (19),
- ein zweites Weichenventil (25) stromabwärts der Chromatographiesäulen, welches einen Zusammenflusspunkt des Analyse- und Vorbereitungspfades definiert,
- einen den zwei Analyse- und Vorbereitungspfaden gemeinen Gegendruckregler (20) stromabwärts des zweiten Weichenventils (25), und
- ein dem Analyse- und Vorbereitungspfad gemeines Sammelsystem (21) stromabwärts des Gegendruckreglers (20) .

8. Anlage nach Anspruch 7, wobei eine mit einem austauschbaren Kopf ausgestattete Modifizierungsmittelpumpe (13, 13') unmittelbar stromaufwärts des ersten Weichenventils (10) oder unmittelbar stromaufwärts eines zweiten Weichenventils (14) platziert ist, welches stromabwärts der Pumpen (11, 12) für überkritisches Fluid platziert ist.

9. Anlage nach Anspruch 8, deren Modifizierungsmittelpumpe (13') eine Niederdruckpumpe ist, die stromaufwärts des ersten Weichenventils (10) platziert ist, und deren abwechselnd operativen Pumpen für überkritisches Fluid Hochdruckpumpen sind.

10. Anlage nach einem der Ansprüche 7 bis 9, die eine Informatik-Steuervorrichtung der verschiedenen Teile der Anlage umfasst.

11. Anlage nach einem der Ansprüche 7 bis 10, die einen Wärmetauscher umfasst, der stromabwärts der Pumpen (11, 12, 13, 13') für überkritisches Fluid und Modifizierungsmittel, und stromaufwärts der Einspritzsysteme (15, 17) platziert ist.

12. Anlage nach einem der Ansprüche 7 bis 11, deren zwei Pumpen (11, 12) für überkritisches Fluid jeweilige Durchsatzkapazitäten aufweisen, die ein Verhältnis von mindestens gleich 2,5 aufweisen.

13. Anlage nach einem der Ansprüche 7 bis 12, die den Gegendruckregler (20) stromabwärts der Nachweisvorrichtung (19) umfasst.

14. Anlage nach einem der Ansprüche 7 bis 13, wobei die Nachweisvorrichtung (19) ein Ultraviolett-Spektralphotometer ist und entweder zwei Messzellen (19a, 19b), die jede parallel im Anschluss an die jeweiligen Chromatographiesäulen (16, 18) montiert sind, oder zwei austauschbare Zellen unmittelbar stromabwärts eines dritten Weichenventils (25) umfasst, das im Anschluss an die Chromatographiesäulen (16, 18) platziert ist.

## Claims

1. Method for the supercritical-phase chromatography of a product P, that includes, continuously and in the order listed:
- a pumping operation (3) for a supercritical fluid,
- an injection operation (5) for at least one sample of the product P in at least one chromatography column (6),
- an operation for detection (7), and
- an operation for the collection (8) of fractions,
**characterized in that** it includes:
- a first routing (X) between an analytical path (1) and a preparatory path (2), said first routing (X) occurring prior to the operation (3) for pumping the supercritical fluid, the said analytical (1) and preparatory (2) paths each including its own supercritical fluid pumping operations, the analytical path comprising a low-pressure pump (3a) and the preparatory path comprising a high-pressure pump (3b) and the said analytical (1) and preparatory (2) paths each including its own injection (5a, 5b) operations, the analytical path comprising at least a column (6a) and the preparatory path comprising at least a column (6b);
- a second routing (Z) at the convergence point of the analytical and preparatory paths upstream of a collection (21) system;
- a regulation of the column outlet pressure using a back-pressure regulator (20), placed downstream of the convergence point and upstream of the collection (21) system;
- a final collection operation (8) by the collection (21) system common to the analytical (1) and preparatory (2) paths.

2. The method according to claim 1, in which a pumping operation (4) of a modifier takes place in parallel with the pumping operation (3) of a supercritical fluid, and the pumped streams converge to effect the addition of the modifier to the supercritical fluid, toward a main path that is common to the analytical and preparatory paths, upstream of a second routing Y toward the respective injection operations for the analytical path (1) and the preparatory path (2).

3. The method according to claim 1, in which a pumping operation (4') of a modifier, and the addition of the latter to the supercritical fluid, take place upstream of the first routing X.

4. The method according to any of claims 1 to 3, in which the detection operation (7) is accomplished by ultraviolet spectroscopy.

5. The method according to any of claims 1 to 4, further comprising an operation for controlling the temperature of the eluent between the pumping operations (3, 4, 4') and the injection operation (5).

6. The method according to any of claims 1 to 5, in which the supercritical fluid is carbon dioxide CO₂.

7. Installation for the supercritical-phase chromatography of a product P, including the following parts:
- two supercritical fluid pumps (11, 12) mounted in parallel, one of the pumps being of reduced flow rate for an analytical mode and the other being of higher flow rate for a preparative mode and only one of which is operational during operation of the installation;
- a first routing valve (10) upstream of the said pumps (11, 12), which is operated so that the supercritical fluid is allowed to flow toward the operational pump;
- a modifier pump;
- two systems (15, 17) for the injection of at least one sample of the product P into at least two respective chromatography columns (16, 18), the said two injection systems and the size of said columns being designed respectively for an analytical mode and for a preparative mode, the said two injection systems being mounted in parallel downstream of the two supercritical fluid pumps and of the one of both modifier pumps, and upstream of the said columns;
- a detection appliance (19);
- a second routing valve (25) downstream of the chromatography columns defining a convergence point of the analytical and preparatory paths;
- a back-pressure regulator (20) common to the analytical (1) and preparatory (2) paths, downstream of the second routing valve (25); and
- a collection system (21) common to the analytical (1) and preparatory (2) paths, downstream of the back-pressure regulator (20).

8. Installation according to claim 7, in which a modifier pump (13, 13') equipped with an interchangeable head is placed just upstream of the first routing valve (10) or just upstream of a second routing valve (14) placed downstream of the supercritical fluid pumps (11, 12).

9. Installation according to claim 8, in which the modifier pump (13') is a low-pressure pump placed upstream of the first routing valve (10), and in which the alternately operational supercritical fluid pumps are high-pressure pumps.

10. Installation according to any of claims 7 to 9, comprising a device for computer control of the different parts of the said installation.

11. Installation according to any of claims 7 to 10, comprising a heat exchanger placed downstream of the supercritical fluid and modifier pumps (11, 12, 13, 13') and upstream of the injection systems (15, 17).

12. Installation according to any of claims 7 to 11, in which the two supercritical fluid pumps (11, 12) have respective flow capacities with a ratio of at least 2.5.

13. Installation according to any of claims 7 to 12, comprising a back-pressure regulator (20) downstream of the detection appliance (19).

14. Installation according to any of claims 7 to 13, in which the detection appliance (19) is an ultraviolet spectrophotometer and includes either two measuring cells (19a, 19b) mounted in parallel, each after respective chromatography columns (16, 18), or two interchangeable cells just downstream of a third routing valve (25) placed after the chromatography columns (16, 18).
